# EUROPEAN PATENT SPECIFICATION

(11) **EP 4 419 386 B1**
(45) Date of publication and mention of the grant of the patent: **18.02.2026**
(21) Application number: 22798148.7
(22) Date of filing: 06.10.2022
(51) Int. Cl.: B60N 2/894, B60N 2/897

(54) **HEADREST MOUNTING ASSEMBLY**
KOPFSTÜTZENMONTAGEANORDNUNG
ENSEMBLE DE MONTAGE D'APPUI-TÊTE

(30) Priority: 21.10.2021 GB 202115143
(43) Date of publication of application: 28.08.2024
(73) Proprietor: Jaguar Land Rover Limited, Coventry, Warwickshire CV3 4LF (GB)
(72) Inventor: PANDURANGA, Emmal, Coventry Warwickshire CV3 4LF (GB); STANCIU, Radu-Andrei, Coventry Warwickshire CV3 4LF (GB)
(74) Representative: Jaguar Land Rover Patents Department
(86) International application number: PCT/EP2022/077833
(87) International publication number: WO 2023/066675

(56) References cited:
- DE-A1- 102014 211 526
- US-A1- 2015 061 341
- US-A1- 2018 072 202

## Description

### TECHNICAL FIELD

The present disclosure relates to a headrest mounting assembly. Aspects of the invention relate to a headrest mounting assembly, a vehicle seat comprising a headrest mounting assembly; and a vehicle comprising one or more vehicle seat.

### BACKGROUND

It is known to incorporate a headrest mounting assembly into a seat back of a vehicle seat. A known headrest mounting assembly comprises a bracket that is fastened to the seat frame. It has been determined that increasing the stiffness of the headrest mounting assembly may provide improved safety for a seat occupant, for example in the event of a collision involving the vehicle.

It is an aim of the present invention to address one or more of the disadvantages associated with the prior art.

US 2018/0072202 A1 describes a vehicle seat in which multiple holes are provided to allow for multiple headrest attachment positions.

### SUMMARY OF THE INVENTION

Aspects and embodiments of the invention provide a headrest mounting assembly, a vehicle seat comprising a headrest mounting assembly; and a vehicle comprising one or more vehicle seat as claimed in the appended claims.

Within the scope of this application it is expressly intended that the various aspects, embodiments, examples and alternatives set out in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle seat incorporating a headrest mounting assembly in accordance with an embodiment of the present invention;
Figure 2 shows a perspective view of the vehicle seat in the vehicle shown in Figure 1;
Figure 3 shows a first perspective view of the headrest mounting assembly fastened to an upper portion of the vehicle seat shown in Figure 2;

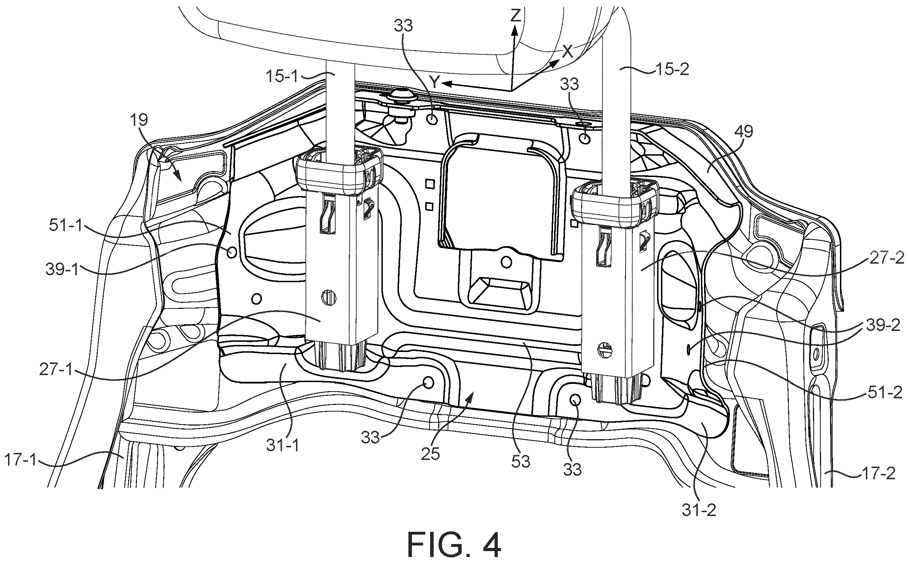

Figure 4 shows a second perspective view of the headrest mounting assembly fastened to an upper portion of the vehicle seat shown in Figure 2;
Figure 5 shows a first perspective view of the headrest mounting assembly with the headrest removed; and
Figure 6 shows a perspective view of a mounting bracket.

### DETAILED DESCRIPTION

A headrest mounting assembly 1 in accordance with an embodiment of the present invention is described herein with reference to the accompanying Figures.

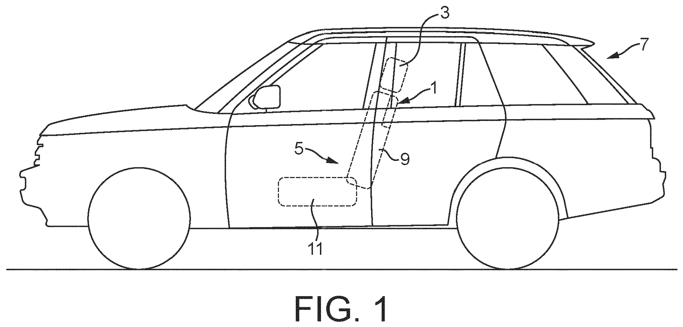

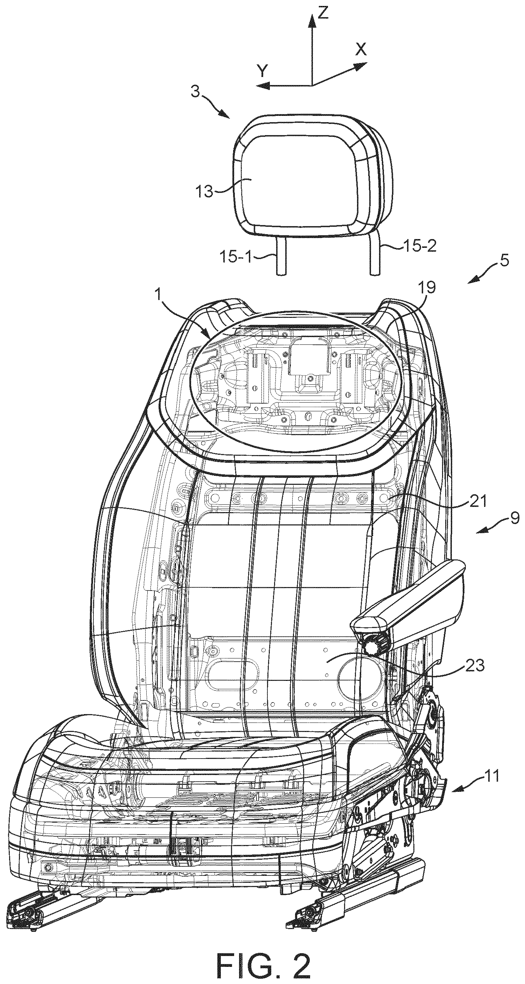

The headrest mounting assembly 1 is suitable for mounting a headrest 3 on a vehicle seat 5. The vehicle seat 5 is for use in a vehicle 7. The vehicle 7 typically comprises a plurality of the vehicle seats 5. As shown in Figure 1, the vehicle 7 in the present embodiment is an automobile. It will be understood that the headrest mounting assembly 1 may be used in other types of vehicles. As shown in Figures 1 and 2, the vehicle seat 5 comprises a seat back 9 and a seat base 11. The longitudinal and/or vertical position of the vehicle seat 5 may be adjusted in conventional manner. Alternatively, or in addition, an incline of the seat back 9 relative to the seat base 11 may be adjusted. Other aspects of the vehicle seat 5 may be adjusted, such as lumbar support or side bolsters.

The headrest mounting assembly 1 is defined with reference to a local reference frame comprising a longitudinal axis X, a transverse axis Y and a vertical axis Z. The vertical axis Z is a central axis of the headrest mounting assembly 1 and, in the assembled vehicle seat 5, is parallel to a central longitudinal axis of the seat back 9. The relative lateral position of components and features of the headrest mounting assembly 1 and the seat back 9 are described herein with reference to the XZ plane (i.e. the plane defined by the longitudinal axis X and the vertical axis Z) of the headrest mounting assembly 1. A component or feature disposed further from the XZ plane (in a transverse direction) is described herein as being outboard or in an outboard position. A component or feature disposed closer to the XZ plane (in a transverse direction) is described herein as being inboard or in an inboard position.

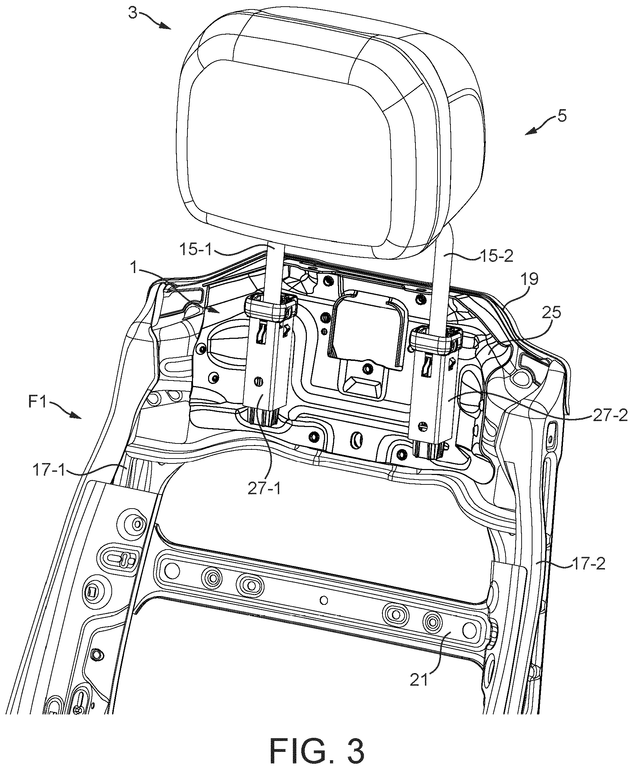

As shown in Figure 2, the headrest 3 is mounted to the seat back 9. The headrest 3 comprises a support member 13, a first interconnecting members 15-1 and a second interconnecting member 15-2. The first and second interconnecting members 15-1, 15-2 locate in the headrest mounting assembly 1 to mount the headrest 3 to the seat back 9. The first and second interconnecting members 15-1, 15-2 comprise metal rods or tubes extending substantially parallel to each other. The first and second interconnecting members 15-1, 15-2 may optionally comprise one or more notches (not shown) for cooperating with a height adjustment mechanism (not shown) to enable the height of the headrest 3 to be adjusted. As shown in Figures 2 and 3, the seat back 9 comprises a frame assembly F1 composed of a plurality of frame members. The frame assembly F1 in the present embodiment comprises first and second side members 17-1, 17-2, a first cross member 19, a second cross member 21 and a third cross member 23. The first, second and third cross members 19, 21, 23 extend between the first and second side members 17-1, 17-2. The first cross member 19 is disposed at the top of the seat back 9. The second cross member 21 is disposed in the middle of the seat back 9. The third cross member 23 is disposed at the bottom of the seat back 9. The headrest mounting assembly 1 is fastened to the first cross member 19 in the present embodiment. It will be understood that the composition of the frame assembly F1 may be modified.

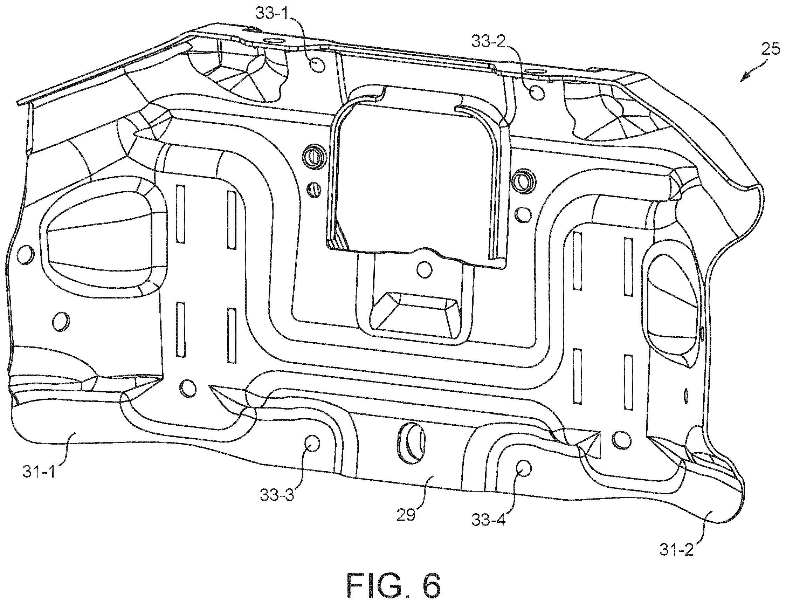

The headrest mounting assembly 1 comprises a mounting bracket 25, a first guide channel 27-1 and a second guide channel 27-2. The mounting bracket 25 comprises a centre portion 29, a first side portion 31-1 and a second side portion 31-2. The mounting bracket 25 has a unitary structure, for example comprising a formed metal plate, as shown in Figure 6. The centre portion 29, the first side portion 31-1 and the second side portion 31-2 are formed integrally. In use, the centre portion 29 locates centrally in the seat back 9. The mounting bracket 25 is mounted to the first cross member 19 to provide a fixed support for the headrest 3. The centre portion 29 comprises upper and lower central fixing apertures 33 for receiving mechanical fasteners 35. In the present embodiment, the centre portion 29 comprises two (2) upper central fixing apertures 33-n and two (2) lower central fixing apertures 33-n. The mechanical fasteners 35 may, for example, comprise screws or bolts and/or nuts.

The first guide channel 27-1 and the second guide channel 27-2 are configured to receive the first and second interconnecting members 15-1, 15-2 respectively to connect the headrest 3 to the seat back 9. The first guide channel 27-1 and the second guide channel 27-2 are fastened to the mounting bracket 25. In the present embodiment, the first guide channel 27-1 and the second guide channel 27-2 are fastened to the centre portion 29 of the mounting bracket 25. The first guide channel 27-1 and the second guide channel 27-2 are welded to the mounting bracket 25. The first and second guide channels 27-1, 27-2 extend parallel to each other at least substantially parallel to the vertical axis Z. A height adjustment mechanism (not shown) may be associated with at least one of the first and second guide channels 27-1, 27-2 to enable adjustment of the vertical position of the headrest 3 relative to the seat back 9.

The first side portion 31-1 extends in a first lateral direction and is disposed outboard of the first guide channel 27-1. In the illustrated arrangement, the first side portion 31-1 is disposed on a right-hand side of the first guide channel 27-1. The second side portion 31-2 extends in a second lateral direction and is disposed outboard of the second guide channel 27-2. In the illustrated arrangement, the second side portion 31-2 is disposed on a left-hand side of the second guide channel 27-2. The first and second side portions 31-1, 31-2 of the mounting bracket 25 are configured to be fastened to the seat back 9. Each of the first and second side portions 31-1, 31-2 comprise one or more outboard fixing aperture 39-n for receiving a mechanical fastener 41-n. In the present embodiment, the mechanical fasteners 41-n comprise screws for fastening the first and second side portions 31-1, 31-2 to the first cross member 19. The one or more outboard fixing aperture 39-n is disposed outboard of the first and second guide channels 27-1, 27-2. In the present embodiment, each of the first and second side portions 31-1, 31-2 comprises two (2) outboard fixing apertures 39-n. The outboard fixing apertures 39-n are spaced apart from each other vertically and/or transversely. It will be understood that other types of fastener may be used to fasten the mounting bracket 25 to the cross member 23. For example, each mechanical fastener 41-n may comprise a rivet or a bolt. Alternatively, or in addition, the mounting bracket 25 could be welded or adhesively bonded to the cross member 23.

The first and second side portions 31-1, 31-2 are inclined relative to the centre portion 29 of the mounting bracket 25. In particular, the first and second side portions 31-1, 31-2 are oriented at an oblique angle relative to the centre portion 29. The first and second side portions 31-1, 31-2 open outwardly towards a front of the seat back 9. The mounting bracket 25 is generally U-shaped in transverse section (i.e., in section perpendicular to the vertical axis Z of the seat back 9).

The first cross member 19 comprises an upper edge 43. An outer flange 45 is formed along the upper edge 43 of the first cross member 19. In the present embodiment, the mounting bracket 25 comprises a bracket upper edge 47 for positioning proximal to the upper edge 43 of the first cross member 19. The bracket upper edge 47 extends across the centre portion 29 and the first and second side portions 31-1, 31-2. An upper bracket flange 49 is formed along the bracket upper edge 47. The upper bracket flange 49 is substantially continuous and is inset from the outer flange 45 when the mounting bracket 25 is mounted to the first cross member 19. The upper bracket flange 49 is at least substantially continuous across the top of the mounting bracket 25. The upper bracket flange 49 extends across the centre portion 29 and each of the first and second side portions 31-1, 31-2. As shown in Figure 3, the centre portion 29 of the mounting bracket 25 is configured to extend upwardly (i.e., in a direction along the vertical axis Z) from the first and second guide channels 27-1, 27-2. This upwardly extended section of the centre portion 29 is continued into the first and second side portions 31-1, 31-2. This arrangement allows the profile of the mounting bracket 25 to conform more closely to the profile of the first cross member 19. The upper bracket flange 49 is inset from the outer flange 45 across at least substantially the width of the mounting bracket 25. A bracket lower flange (not shown) could optionally be formed along a lower edge of the mounting bracket 25.

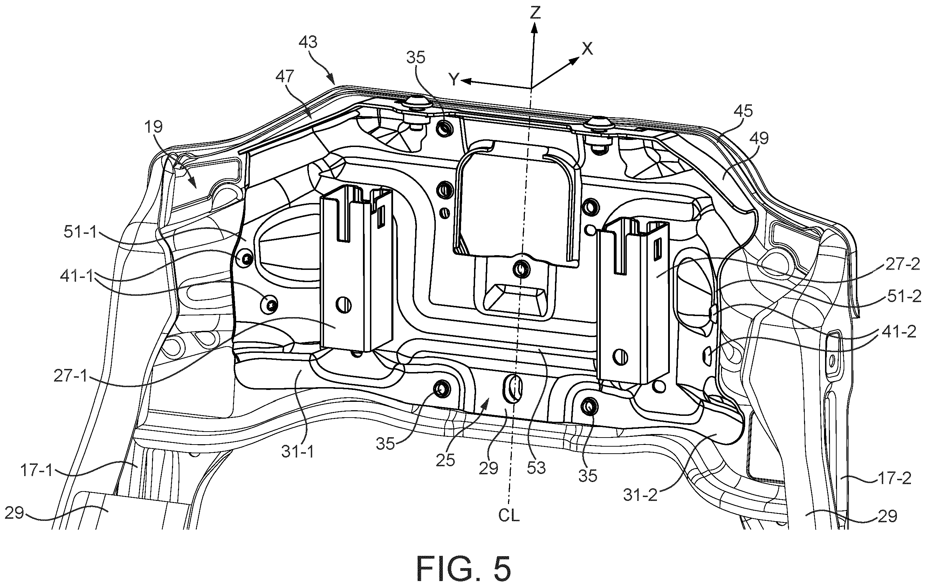

As shown in Figure 5, the first and second side portions 31-1, 31-2 of the mounting bracket 25 comprise respective central platforms 51-1, 51-2. The one or more outboard fixing aperture 39-n are formed in the central platforms 51-1, 51-2 of the first and second side portions 31-1, 31-2. The central platforms 51-1, 51-2 are raised relative to the adjacent upper and lower portions of the first and second side portions 31-1, 31-2. The central platforms 51-1, 51-2 are offset towards a front of the seat back 9 relative to the adjacent upper portion and/or the adjacent lower portion of the first and second side portions 31-1, 31-2. The section of each of the first and second side portions 31-1, 31-2 disposed between the respective central platforms 51-1, 51-2 and the upper bracket flange 49 has a concave profile. In the present embodiment, this portion of the mounting bracket 25 is generally C-shaped.

The centre portion 29 of the mounting bracket 25 comprises a ridge 53 for reinforcing the mounting bracket 25. The ridge 53 extends in a transverse direction between the first and second guide channels 27-1, 27-2.

The headrest mounting assembly 1 is mounted to the seat back 9 during assembly of the vehicle seat 5. The mounting bracket 25 is aligned with the first cross member 19. The mounting bracket 25 is fastened in position by the mechanical fasteners 35 disposed in the central fixing apertures 33-n, and the mechanical fasteners 41 in the outboard fixing apertures 39-n. Once the mounting bracket 25 is installed, the assembly and fabrication of the vehicle seat 5 continues in conventional manner, for example to apply cushioning and upholster the seat back 9. Once assembled, the headrest 3 can be removably located on the seat back 9. In particular, the first and second interconnecting members 15-1, 15-2 are located in the first guide channel 27-1 and the second guide channel 27-2.

The headrest mounting assembly 1 is effective in distributing operational loadings to the seat back 9. The headrest mounting assembly 1 may offer increased stiffness compared to prior art mounting assemblies. The incorporation of the first and second side portions 31-1, 31-2 into the mounting bracket 9 may distribute loading, for example to facilitate the dissipation of energy in the event of a collision. The peak load applied to the mounting bracket 9 may be reduced. At least in certain embodiments, the headrest mounting assembly 1 may offer improved safety characteristics for an occupant of the vehicle seat 3. For example, the headrest mounting assembly 1 may help to reduce soft tissue injury (also known as whiplash) to the occupant's neck in the event of a collision, for example a rear-end collision at a speed in the range 16km/h to 24km/h.

## Claims

1. A vehicle seat (5) comprising:
a frame assembly (F1), the frame assembly (F1) comprising:
first and second side members (17-1, 17-2); and
a cross member (19) extending between the first and second side members (17-1, 17-2), such that the cross member (19) and adjacent portions of the first and second side members (17-1, 17-2) are, together, generally U-shaped in a transverse section; and
a headrest mounting assembly (1) mounted to the front of the frame assembly (F1), the headrest mounting assembly (1) comprising:
a mounting bracket (25) comprising a centre portion (29), a first side portion (31-1) and a second side portion (31-2); and
a first guide channel (27-1) for receiving a first headrest interconnecting member (15-1), and a second guide channel (27-2) for receiving a second headrest interconnecting member (15-2), the first and second guide channels (27-1, 27-2) being fastened to the centre portion (29) of the mounting bracket (25);
wherein the first side portion (31-1) is disposed outboard of the first guide channel (27-1) on a first side of the mounting bracket (25), and the second side portion (31-2) is disposed outboard of the second guide channel second guide channel (27-2) on a second side of the mounting bracket (25), each of the first and the second side portions (31-1, 31-2) being fastened to the seat back (9) outboard of the first and second guide channels (27-1, 27-2) respectively; and
wherein the first and second side portions (31-1, 31-2) are inclined relative to the centre portion (29) of the mounting bracket (25) and open outwardly towards a front of the seat back (9), such that the mounting bracket (25) is generally U-shaped in a transverse section so as to be substantially complementary with the cross member (19) in a corresponding transverse section.

2. A vehicle seat (5) as claimed in claim 1, wherein each of the first and the second side portions (31-1, 31-2) comprises at least one aperture (39-nn) for receiving a mechanical fastener to fasten the mounting bracket (25) to the seat back (9).

3. A vehicle seat (5) as claimed in claim 1 or 2, wherein the mounting bracket (25) comprises a bracket upper edge (43) for positioning proximal to an upper edge of the cross member (19), the bracket upper edge (43) extending across the centre portion (29) and the first and second side portions (31-1, 31-2).

4. A vehicle seat (5) as claimed in claim 3, wherein an upper bracket flange (45) is formed along the bracket upper edge (43) of the mounting bracket (25), the upper bracket flange (45) being at least substantially continuous.

5. A vehicle seat (5) as claimed in claim 3 or 4, wherein the centre portion (29) of the mounting bracket (25) extends upwardly from the first and second guide channels (27-1, 27-2) to the bracket upper edge (43).

6. A vehicle seat (5) as claimed in any one of the preceding claims, wherein each of the first and second side portions (31-1, 31-2) comprise a central platform (51-1, 51-2) which is raised relative to at least one of an upper region and a lower region.

7. A vehicle seat (5) as claimed in any one of the preceding claims, wherein the centre portion (29) comprises a ridge (53) extending in a transverse direction between the first and second guide channels (27-1, 27-2).

8. A vehicle seat (5) as claimed in any one of the preceding claims, wherein the mounting bracket (25) comprises a plate having a unitary composition.

9. A vehicle seat (5) as claimed in any one of the preceding claims, wherein the centre portion (29) comprises a plurality of apertures (33) for fastening the mounting bracket (25) to the seat back (9).

10. A vehicle comprising one or more vehicle seat (5) as claimed in any preceding claim.

## Patentansprüche

1. Fahrzeugsitz (5), umfassend:
eine Rahmenbaugruppe (F1), wobei die Rahmenbaugruppe (F1) umfasst:
ein erstes und ein zweites Seitenelement (17-1, 17-2); und
einen Querträger (19), der sich derart zwischen dem ersten und dem zweiten Seitenelement (17-1, 17-2) erstreckt, dass der Querträger (19) und benachbarte Abschnitte des ersten und des zweiten Seitenelements (17-1, 17-2) zusammen in einem Querschnitt allgemein U-förmig sind; und
eine Kopfstützen-Montagebaugruppe (1), die an der Vorderseite der Rahmenbaugruppe (F1) montiert ist, wobei die Kopfstützen-Montagebaugruppe (1) umfasst:
eine Montagehalterung (25), die einen Mittelabschnitt (29), einen ersten Seitenabschnitt (31-1) und einen zweiten Seitenabschnitt (31-2) umfasst; und
einen ersten Führungskanal (27-1) zum Aufnehmen eines ersten Kopfstützen-Verbindungselements (15-1) und einen zweiten Führungskanal (27-2) zum Aufnehmen eines zweiten Kopfstützen-Verbindungselements (15-2), wobei der erste und der zweite Führungskanal (27-1, 27-2) an dem Mittelabschnitt (29) der Montagehalterung (25) befestigt sind;
wobei der erste Seitenabschnitt (31-1) außerhalb des ersten Führungskanals (27-1) auf einer ersten Seite der Montagehalterung (25) angeordnet ist und der zweite Seitenabschnitt (31-2) außerhalb des zweiten Führungskanals zweiten Führungskanals (27-2) auf einer zweiten Seite der Montagehalterung (25) angeordnet ist, wobei sowohl der erste als auch der zweite Seitenabschnitt (31-1, 31-2) außerhalb des ersten bzw. des zweiten Führungskanals (27-1, 27-2) an der Sitzlehne (9) befestigt ist; und
wobei der erste und der zweite Seitenabschnitt (31-1, 31-2) relativ zu dem Mittelabschnitt (29) der Montagehalterung (25) geneigt sind und sich nach außen zu einer Vorderseite der Sitzlehne (9) hin öffnen, derart, dass die Montagehalterung (25) in einem Querschnitt allgemein U-förmig ist, so dass sie im Wesentlichen komplementär zu dem Querträger (19) in einem entsprechenden Querschnitt ist.

2. Fahrzeugsitz (5) nach Anspruch 1, wobei sowohl der erste als auch der zweite Seitenabschnitt (31-1, 31-2) mindestens eine Öffnung (39-nn) zum Aufnehmen eines mechanischen Befestigungselements zum Befestigen der Montagehalterung (25) an der Sitzlehne (9) umfasst.

3. Fahrzeugsitz (5) nach Anspruch 1 oder 2, wobei die Montagehalterung (25) eine Halterungsoberkante (43) zur Positionierung in der Nähe einer Oberkante des Querträgers (19) umfasst, wobei sich die Halterungsoberkante (43) über den Mittelabschnitt (29) und den ersten und den zweiten Seitenabschnitt (31-1, 31-2) erstreckt.

4. Fahrzeugsitz (5) nach Anspruch 3, wobei entlang der Halterungsoberkante (43) der Montagehalterung (25) ein oberer Halterungsflansch (45) ausgebildet ist, wobei der obere Halterungsflansch (45) mindestens im Wesentlichen durchgehend ist.

5. Fahrzeugsitz (5) nach Anspruch 3 oder 4, wobei sich der Mittelabschnitt (29) der Montagehalterung (25) von dem ersten und dem zweiten Führungskanal (27-1, 27-2) nach oben zur Halterungsoberkante (43) erstreckt.

6. Fahrzeugsitz (5) nach einem der vorstehenden Ansprüche, wobei sowohl der erste als auch der zweite Seitenabschnitt (31-1, 31-2) eine zentrale Plattform (51-1, 51-2) umfasst, die relativ zu mindestens einem aus einem oberen Bereich und einem unteren Bereich erhöht ist.

7. Fahrzeugsitz (5) nach einem der vorstehenden Ansprüche, wobei der Mittelabschnitt (29) einen Grat (53) umfasst, der sich in einer Querrichtung zwischen dem ersten und dem zweiten Führungskanal (27-1, 27-2) erstreckt.

8. Fahrzeugsitz (5) nach einem der vorstehenden Ansprüche, wobei die Montagehalterung (25) eine Platte mit einer einheitlichen Zusammensetzung umfasst.

9. Fahrzeugsitz (5) nach einem der vorstehenden Ansprüche, wobei der Mittelabschnitt (29) eine Vielzahl von Öffnungen (33) zum Befestigen der Montagehalterung (25) an der Sitzlehne (9) umfasst.

10. Fahrzeug, welches einen oder mehrere Fahrzeugsitze (5) nach einem der vorstehenden Ansprüche umfasst.

## Revendications

1. Siège de véhicule (5) comprenant :
un ensemble cadre (F1), l'ensemble cadre (F1) comprenant :
des premier et second éléments latéraux (17-1, 17-2) ; et
une traverse (19) s'étendant entre les premier et second éléments latéraux (17-1, 17-2), de telle sorte que la traverse (19) et des parties adjacentes des premier et second éléments latéraux (17-1, 17-2) sont, ensemble, généralement en forme de U dans une section transversale ; et
un ensemble de montage d'appui-tête (1) monté à l'avant de l'ensemble cadre (F1), l'ensemble de montage d'appui-tête (1) comprenant :
un support de montage (25) comprenant une partie centrale (29), une première partie latérale (31-1) et une seconde partie latérale (31-2) ; et
un premier canal de guidage (27-1) destiné à recevoir un premier élément d'interconnexion d'appui-tête (15-1), et un second canal de guidage (27-2) destiné à recevoir un second élément d'interconnexion d'appui-tête (15-2), les premier et second canaux de guidage (27-1, 27-2) étant fixés à la partie centrale (29) du support de montage (25) ;
dans lequel la première partie latérale (31-1) est disposée à l'extérieur du premier canal de guidage (27-1) sur un premier côté du support de montage (25), et la seconde partie latérale (31-2) est disposée à l'extérieur du second canal de guidage de second canal de guidage (27-2) sur un second côté du support de montage (25), chacune des première et seconde parties latérales (31-1, 31-2) étant fixée au dossier de siège (9) à l'extérieur des premier et second canaux de guidage (27-1, 27-2), respectivement ; et
dans lequel les première et seconde parties latérales (31-1, 31-2) sont inclinées par rapport à la partie centrale (29) du support de montage (25) et s'ouvrent vers l'extérieur en direction d'un avant du dossier de siège (9), de telle sorte que le support de montage (25) est généralement en forme de U dans une section transversale de manière à être sensiblement complémentaire de la traverse (19) dans une section transversale correspondante.

2. Siège de véhicule (5) selon la revendication 1, dans lequel chacune des première et seconde parties latérales (31-1, 31-2) comprend au moins une ouverture (39-nn) destinée à recevoir une attache mécanique pour fixer le support de montage (25) au dossier de siège (9).

3. Siège de véhicule (5) selon la revendication 1 ou 2, dans lequel le support de montage (25) comprend un bord supérieur de support (43) à positionner à proximité d'un bord supérieur de la traverse (19), le bord supérieur de support (43) s'étendant à travers la partie centrale (29) et les première et seconde parties latérales (31-1, 31-2).

4. Siège de véhicule (5) selon la revendication 3, dans lequel une bride de support supérieure (45) est formée le long du bord supérieur de support (43) du support de montage (25), la bride de support supérieure (45) étant au moins sensiblement continue.

5. Siège de véhicule (5) selon la revendication 3 ou 4, dans lequel la partie centrale (29) du support de montage (25) s'étend vers le haut des premier et second canaux de guidage (27-1, 27-2) au bord supérieur du support (43).

6. Siège de véhicule (5) selon l'une quelconque des revendications précédentes, dans lequel chacune des première et seconde parties latérales (31-1, 31-2) comprend une plate-forme centrale (51-1, 51-2) qui est surélevée par rapport à au moins une région supérieure et une région inférieure.

7. Siège de véhicule (5) selon l'une quelconque des revendications précédentes, dans lequel la partie centrale (29) comprend une arête (53) s'étendant dans une direction transversale entre les premier et second canaux de guidage (27-1, 27-2).

8. Siège de véhicule (5) selon l'une quelconque des revendications précédentes, dans lequel le support de montage (25) comprend une plaque présentant une composition unitaire.

9. Siège de véhicule (5) selon l'une quelconque des revendications précédentes, dans lequel la partie centrale (29) comprend une pluralité d'ouvertures (33) pour fixer le support de montage (25) au dossier de siège (9).

10. Véhicule comprenant un ou plusieurs sièges de véhicule (5) selon l'une quelconque revendication précédente.
